Europäisches Patentamt

European Patent Office

Office européen des brevets

(19)

(11) Veröffentlichungsnummer : **0 017 026**
**B1**

(12) **EUROPÄISCHE PATENTSCHRIFT**

(45) Veröffentlichungstag der Patentschrift :
**03.11.82**

(51) Int. Cl.³ : **G 03 B 21/11, G 03 B 27/40**

(21) Anmeldenummer : **80101253.5**

(22) Anmeldetag : **12.03.80**

(54) **Mehrfach-Objektivträger in einem Mikrofilm-Lesegerät.**

(30) Priorität : **21.03.79 DE 2911090**

(43) Veröffentlichungstag der Anmeldung :
**15.10.80 (Patentblatt 80/21)**

(45) Bekanntmachung des Hinweises auf die Patenterteilung : **03.11.82 Patentblatt 82/44**

(84) Benannte Vertragsstaaten :
**BE FR GB IT NL**

(56) Entgegenhaltungen :
**DE A 2 223 190**
**DE A 2 758 479**
**DE B 2 116 813**
**US A 4 060 324**

(73) Patentinhaber : **AGFA-GEVAERT Aktiengesellschaft
D-5090 Leverkusen 1 (DE)**

(72) Erfinder : **Freiberg, Günter
Arnimstrasse 12
D-8000 München 70 (DE)**

Imprimerie Jouve, 18, rue St-Denis, 75001 Paris, France

## Mehrfach-Objektivträger in einem Mikrofilm-Lesegerät

Die Erfindung betrifft eine Vorrichtung zum wahlweisen Positionieren jeweils eines von mehreren von einem Objektivträger getragenen Objektivtuben in den Abbildungsstrahlengang eines Mikrofilm-Lesegerätes, wobei der Objektivträger schwenkbar um eine gerätefeste Achse gelagert ist.

Für Mikrofilm-Lesegeräte werden Projektionsobjektive für unterschiedliche Vergrößerungen angeboten, wobei deren Objektivtuben in einem Objektivträger austauschbar gelagert sind und der Gerätebenutzer das Objektiv mit der jeweils gewünschten Vergrößerung in den Objektivträger einlegt. In der Praxis genügen in vielen Fällen für den laufenden Bedarf zwei Objektive unterschiedlicher Vergrößerungsfaktoren, so daß häufig dazu übergegangen wird, Mikrofilmlesegeräte mit einem Objektivträger für zwei Objektive anzubieten. Hierbei muß dann eine Umschaltvorrichtung vorgesehen sein, um das jeweils gewünschte der Objektive in dem Abbildungsstrahlengang zu positionieren.

Es ist ein Mikrofilm-Lesegerät bekannt, bei dem oberhalb des abzubildenden Mikrobildes an der Unterseite des Lesegeräteoberteils ein Doppelobjektivträger verschieblich angeordnet ist. Über geeignet ausgebildete Auflaufkurven wird erreicht, daß sich beim Verschieben des Objektivträgers das in Funktionsstellung zu bringende Objektiv in Richtung Mikrobild absenkt, bis es auf der das Mikrobild üblicherweise überdeckenden transparenten Glasplatte aufliegt, während das nicht benötigte Objektiv von der transparenten Platte abgehoben wird.

Durch die DE-AS 21 16 813 ist es auch bereits bekannt, zum wahlweisen Positionieren eines von mehreren, von einem Objektivträger getragenen Objektiven in einem Mikrofilm-Lesegerät den Objektivträger um eine gerätefeste Achse schwenkbar anzuordnen. Bei Mikroskopobjektiv-Anordnungen ist es darüber hinaus üblich, die Drehachse des Objektivträgers gegen die abzubildende Ebene zu neigen.

Der Erfindung liegt nun die Aufgabe zugrunde, eine Vorrichtung gemäß dem Gattungsbegriff des Hauptanspruches zu schaffen, die sich durch einen einfachen mechanischen Aufbau auszeichnet.

Diese Aufgabe wird erfindungsgemäß gelöst durch die Merkmale des Hauptanspruchs. Weitere vorteilhafte Merkmale der Erfindung sind den Unteransprüchen entnehmbar.

Die erfindungsgemäße Vorrichtung bringt eine Reihe von Vorteilen gegenüber bekannten Objektivhalterungen. Die schwimmende Lagerung der Objektivtuben ermöglicht eine exakte Ausrichtung des jeweils in Funktionsstellung befindlichen Objektives relativ zu dem zu projizierenden Mikrobild durch Auflage auf dem über dem Mikrobild befindlichen transparenten Träger. Die Kopplung der Objektive verhindert ein selbsttätiges Verschwenken des außer Betriebsstellung befindlichen Objektivtubus und verhindert somit, daß beim Positionieren der Mikrofilm-, vorzugsweise Mikrofichebühne der Bühnenrand an dem in die Bewegungsbahn der Bühne hineinragenden möglicherweise gekippten Objektiv bzw. Objektivtubus hängenbleiben kann.

Außerdem kann hierdurch unabhängig von dem Verschwenken des Objektivträgers der Objektivträger zusätzlich entgegen der Kraft der Blattfeder angehoben werden, so daß sich trotz exakter Führung des Objektivträgers eine große Bewegungsfreiheit desselben ergibt. Schließlich ist hierdurch eine sehr geringe Bauhöhe der Objektivträgereinrichtung möglich, was sich u. a. günstig auf die Geräteabmessungen auswirkt.

Die Erfindung wird anhand von Zeichnungen näher erläutert. Es zeigen

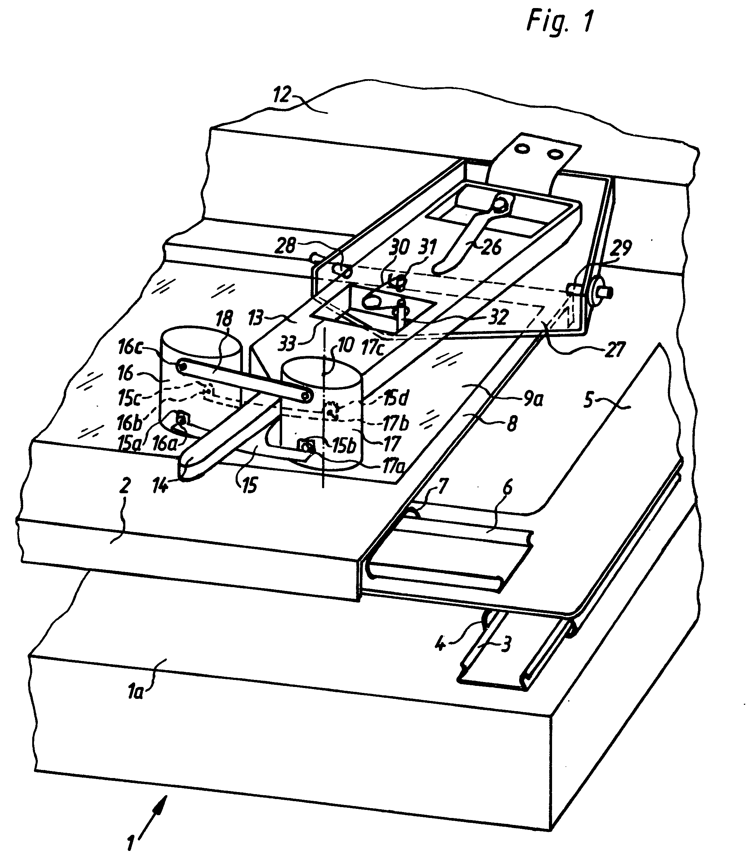

Figur 1   einen Ausschnitt aus einer perspektivischen Ansicht eines Mikrofilm-Lesegerätes mit einem erfindungsgemäß gelagerten Objektivträger in halbschematischer Darstellung,

Figur 2   eine Vorderansicht des Objektivhalters,

Figur 3   einen Schnitt durch die Lagerung des Objektivträgers und

Figur 4   eine Aufsicht auf die Lagerung gemäß Figur 3.

Auf dem Unterteil 1 eines Mikrofilm-Lesegerätes, in dem eine nicht dargestellte Beleuchtungseinrichtung zum Beleuchten des ausgewählten Bildes eines Mikrofilms, vorzugsweise eines Mikrofiches 11 untergebracht ist, ist in bekannter Weise eine Filmbühne 2 in zwei zueinander senkrecht liegenden Koordinatenrichtungen parallel zur Oberfläche 1a des Geräteunterteils 1 verschieblich gelagert. Hierzu ist auf einer auf der Oberfläche 1a befestigten Führungsschiene 3 eine Schiene 4 kugelgelagert. Diese Schiene 4 trägt ein rechtwinkeliges Winkelblech 5, dessen einer Schenkel auf der Führungsschiene 4 befestigt ist und dessen anderer Schenkel sich in nicht näher dargestellter Weise über einen Gleiter auf der Oberfläche 1a abstützt. Auf dem Winkelblech 5 ist senkrecht zur Führungsschiene 3 eine weitere Führungsschiene 6 befestigt, auf der wiederum eine Führungsschiene 7 gelagert ist. Diese Führungsschiene 7 trägt das vordere Ende eines Rahmens 8, der sich an seiner Hinterkante auf der Oberfläche 1a abstützt. Im Rahmen 8 sind in bekannter Weise zwei übereinander liegende transparente Platten 9 gehalten, von denen die obere abhebbar ist und zwischen die das Mikrofiche 11 eingelegt wird.

Zum Positionieren des gewünschten Mikrobildes in Projektionsstellung muß die Bühne 2 so verschoben werden, daß sich das abzubildende Mikrobild genau im Projektionsstrahlengang 10 befindet. Zur Projektion des Bildes sind in einem an sich bekannten und daher nicht näher dargestellten haubenförmigen Geräteoberteil Umlenkspiegel sowie eine dem Benutzer zugewandte Projektionsfläche vorgesehen.

An einem gerätefesten Teil 12 ist ein Objektivträger 13 gelagert. An seinem dem Benutzer zugewandten Ende ist eine Handhabe 14 zum Verstellen des Objektivträgers ausgebildet. Über ein H-förmiges, federndes Trägerelement 15, dessen Querbalken am vorderen Ende des Objektivträgers befestigt ist, sind zwei Objektivtuben 16, 17 von Projektionsobjektiven mit unterschiedlichem Abbildungsmaßstab am Objektivträger gehalten. Hierzu sind an den vier Enden der beiden Längsbalken des H-förmigen Trägers Laschen 15a bis 15d angeformt, in denen an den Objektivtuben 16, 17 angeformte Stifte 16a, 16b, 17a, 17b gelagert sind. Eine Koppel 18 verbindet die beiden Objektivtuben 16, 17 über an den jeweiligen Objektivtuben angeformte Bolzen 16c, 17c, so daß die beiden Objektivtuben stets achsparallel ausgerichtet sind. In die beiden Objektivtuben sind zwei Objektive einsetzbar, die über nicht dargestellte, bekannte Mechanismen relativ zum abzubildenden Mikrobild fokussiert werden können.

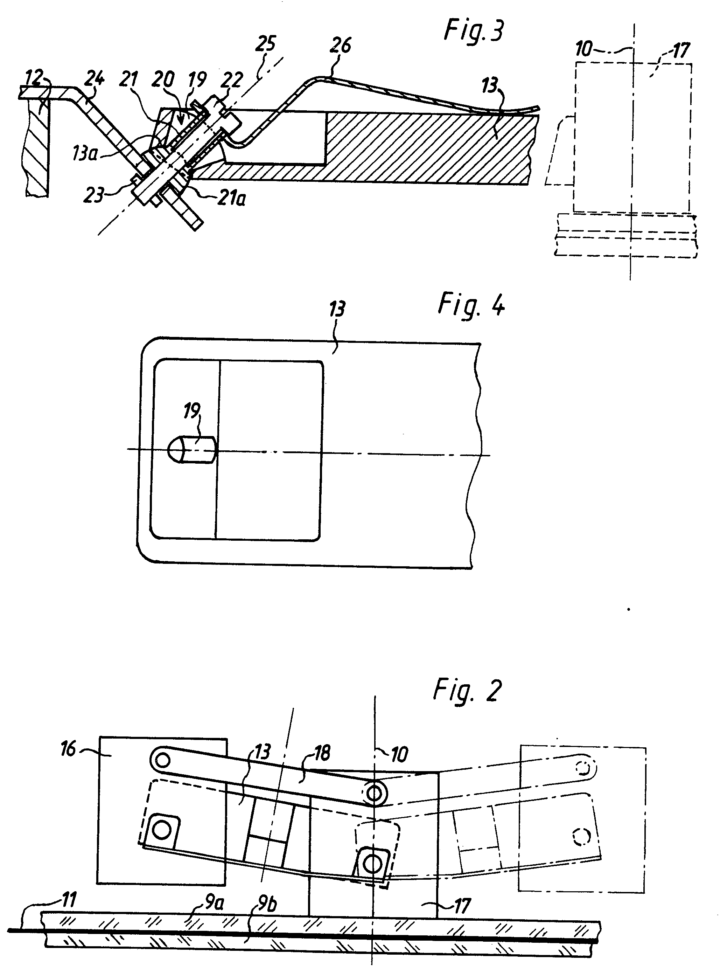

Die Lagerung des Objektivträgers am Gerät ist am besten aus Figur 3 zu erkennen. Über ein Langloch 19, dessen Längsrichtung in Figur 3 in der Zeichenebene liegt und dessen Breite dem Durchmesser des Stehbolzens 20 entspricht, ist der Objektivträger um den Stehbolzen 20 drehbar gelagert. Der Stehbolzen 20 setzt sich zusammen aus einer Hülse 21 und einer in dieser Hülse geführten Schraube 22, die über eine Mutter 23 an einem Winkelblech 24 befestigt ist. Die Hülse 21 ist an ihrem unteren Bereich 21a halbkugelförmig ausgebildet, wobei der ebene Bereich der Halbkugel am Winkelblech 24 anliegt und der kugelförmige Bereich in eine entsprechend gewölbte Ausnehmung 13a des Objektivhalters 13 eingreift. Hierdurch entsteht eine Kugellagerung des Objektivhalters, wobei die Bewegungsfreiheit des Objektivträgers 13 durch die Stehbolzen-Langloch-Führung 19 bis 22 eingeschränkt ist.

Wie insbesondere aus Figur 3 ersichtlich ist, ist die Drehachse 25 gegenüber dem Projektionsstrahlengang 10 geneigt, so daß beim Verschwenken des Objektivträgers 13 dieser eine Kegelmantelfläche um die Achse 25 beschreiben würde. Aufgrund der Führung des Objektivträgers 13 im Langloch 20 ist zusätzlich ein Senken des Objektivträgers in Richtung zur Drehachse 25 hin oder von dieser weg möglich. Um ein ausreichend starkes Aufliegen des jeweils im Betriebsposition befindlichen Objektivtubus auf der transparenten Platte 9a zu gewährleisten, ist am Bolzen eine Blattfeder 26 befestigt, deren freies Ende auf dem Objektivträger 13 aufliegt und diesen nach unten drückt.

Am gerätefesten Teil 12 ist ein Träger 27 angeformt, der zu beiden Seiten je einen einstellbaren Anschlagstift 28, 29 trägt. Diese Anschlagstifte wirken mit dem Objektivträger 13 zusammen und definieren den Schwenkbereich desselben. Die beiden Anschlagstellungen des Objektivträgers 13 sind gleichzeitig die beiden Funktionsstellungen, in denen jeweils einer der Objektivtuben 16, 17 in Projektionsstellung ist.

Die beiden Schenkel einer Schenkelfeder 30 sind an zwei Stiften 31, 32 befestigt, wobei der Stift 31 am Objektivträger 13 und der Stift 32 am Träger 27 angebracht ist. Der Stift 32 ragt durch einen Durchbruch 33 im Objektivträger 31 durch diesen hindurch. Die Federanordnung ist derart, daß, wenn sich der Objektivträger 13 in der Mitte zwischen den beiden Anschlägen 28 und 29 befindet, die auf den Objektivträger 13 einwirkende Verschiebekraft einen Nullpunkt durchläuft, während bei Abweichung des Objektivträgers von seiner Mittellage die Feder 30 den Objektivträger 13 in eine seiner beiden Anschlagstellungen drückt.

Wie deutlich aus Figur 2 ersichtlich ist, neigt sich der Objektivträger 13 gegenüber der Ebene der Glasplatten 9a, 9b beim Verschwenken des Objektivträgers 13 aus seiner Mittellage. Hierdurch wird der nicht in Projektionsposition befindliche Objektivtubus selbsttätig von der transparenten Platte 9a abgehoben, während der in Abbildungsposition befindliche Objektivtubus unter der Wirkung von Eigengewicht sowie unter der Wirkung der Feder 26 gegen die transparente Platte 9a gedrückt wird. Die schwimmende Lagerung der Objektivtuben gewährleistet hierbei ein gleichmäßiges Aufliegen des in Projektionsposition befindlichen Objektivtubus auf der transparenten Platte 9a unabhängig von vorhandenen Toleranzen in der Bühnenführung.

**Ansprüche**

1. Vorrichtung zum wahlweisen Positionieren jeweils eines von mehreren, von einem Objektivträger (13) getragenen Objektivtuben (16, 17) in den Abbildungsstrahlengang eines Mikrofilm-Lesegerätes, wobei der Objektivträger schwenkbar um eine gerätefeste Achse (25) gelagert ist, dadurch gekennzeichnet, daß
— die Achse (25) zur Ebene des Mikrofilms (11) geneigt ist,
— der Objektivträger in Richtung zur Drehachse (25) hin oder von dieser weg schwenkbar ist,
— der Objektivträger unter der Wirkung einer zum Mikrofilm hin gerichteten Kraft steht, und
— die Objektivtuben am freien Ende des Objektivträgers schwimmend gelagert sind.

2. Vorrichtung nach Anspruch 1, dadurch gekennzeichnet, daß der Objektivträger (13) um einen in Richtung zum Abbildungsstrahlengang (10) im Bereich eines in Gebrauchsstellung befindlichen Objektivtubus hin geneigten Stehbolzen (20) schwenkbar ist.

3. Vorrichtung nach Anspruch 2, dadurch gekennzeichnet, daß der Objektivträger (13) am Stehbolzen (20) über ein Langloch (19) geführt ist.

4. Vorrichtung nach Anspruch 3, dadurch gekennzeichnet, daß die Richtung des Langlochs (19) im wesentlichen radial zur Achse (25) verläuft.

5. Vorrichtung nach einem der Ansprüche 2 bis 4, dadurch gekennzeichnet, daß eine mit dem Stehbolzen (20) verbundene Blattfeder (26) auf den Objektivträger (13) einwirkt.

6. Vorrichtung nach einem der Ansprüche 2 bis 5, dadurch gekennzeichnet, daß der Objektivträger (13) über ein Kugelgelenk (13a, 21a) am Stehbolzen (20) angelenkt ist.

7. Vorrichtung nach einem der vorhergehenden Ansprüche, dadurch gekennzeichnet, daß die Objektivtuben (16, 17) derart miteinander gekoppelt sind, daß sie in jeder Lage zumindest annähernd achsparallel ausgerichtet sind.

8. Vorrichtung nach Anspruch 7, dadurch gekennzeichnet, daß zwei Objektivtuben (16, 17) über ein Viergelenkeck (15a, 15b, 16a, 16c, 17a, 17c) miteinander verbunden sind.

9. Vorrichtung nach einem der vorhergehenden Ansprüche, dadurch gekennzeichnet, daß der Objektivträger (13) zwei Objektivtuben (16, 17) trägt und zwischen zwei Anschlagstellungen verschwenkbar ist, wobei jede der Anschlagstellungen einer Betriebsstellung jeweils eines der beiden Objektivtuben entspricht.

10. Vorrichtung nach Anspruch 9, dadurch gekennzeichnet, daß Mittel (30, 31, 32) vorgesehen sind, um den Objektivträger (13) in jeweils einer der Anschlagstellungen zu halten.

11. Vorrichtung nach Anspruch 10, dadurch gekennzeichnet, daß zwischen einen gerätefesten Stift (32) und einen am Objektivträger (13) befestigten Stift (31) eine Schenkelfeder (30) gespannt ist, die den Objektivträger zu jeweils einem der Anschläge (28, 29) zu drücken trachtet.

## Claims

1. A device for the selective positioning in each case of several lens tubes (16, 17) borne by a lens carrier (13) in the image ray path of a microfilm reading apparatus, the lens carrier being pivotably mounted about an axis (25) fixed with respect to the apparatus, characterized in that
— the axis (25) is inclined with respect to the microfilm (11),
— the lens carrier is pivotable in the direction of the axis of rotation (25) towards or away from the latter,
— the lens carrier is acted upon by a force directed towards the microfilm and
— the lens tubes are float-mounted at the free end of the lens carrier.

2. A device according to claim 1, characterized in that the lens carrier (13) is pivotable about a stay bolt (20) inclined towards the image ray path (10) in the region of a lens tube located in the operating position.

3. A device according to claim 2 characterized in that the lens carrier (13) is guided at the stay bolt (20) via a slotted hole (19).

4. A device according to claim 3, characterized in that the direction of the slotted hole (19) extends substantially radially with respect to the axis (25).

5. A device according to one of claims 2 to 4, characterized in that a leaf spring (26) connected to the stay bolt (20) acts upon the lens carrier (13).

6. A device according to one of claims 2 to 5, characterized in that the lens carrier (13) is pivoted at the stay bolt (20) via a ball pivot (13a, 21a).

7. A device according to one of the preceding claims, characterized in that the lens tubes (16, 17) are coupled to each other such that they are aligned so as to be at least approximately axially parallel in every position.

8. A device according to claim 7, characterized in that two lens tubes (16, 17) are connected to each other via a four-hinge angular member (15a, 15b, 16a, 16c, 17a, 17c).

9. A device according to one of the preceding claims, characterized in that the lens carrier (13) bears two lens tubes (16, 17) and can be pivoted between two stop positions, each of the stop positions corresponding to an operating position of one of the two lens tubes in each case.

10. A device according to claim 9, characterized in that means (30, 31, 32) are provided in order to retain the lens carrier (13) in one of the stop positions in each case.

11. A device according to claim 10, characterized in that a leg spring (30) is clamped between a pin (32) fixed with respect to the apparatus and a pin (31) secured to the lens carrier (13), the leg spring (30) serving to urge the lens carrier to one of the stops (28, 29) in each case.

## Revendications

1. Dispositif pour positionner, au choix, un parmi plusieurs tubes d'objectifs (16, 17), portés par un porte-objectif (13) dans le trajet du faisceau de reproduction d'un appareil de lecture de microfilm, le porte-objectif étant monté à articulation autour d'un axe (25) fixe par rapport à l'appareil, caractérisé par le fait que :
— l'axe (25) est incliné par rapport au plan du microfilm (11),
— le porte-objectif est susceptible de basculer en direction de l'axe de rotation ou pour s'en éloigner,
— le porte-objectif est sous l'effet d'une force dirigée vers le microfilm, et
— les tubes d'objectifs sont montés à flottement à l'extrémité du porte-objectif.

2. Dispositif selon la revendication 1, caractérisé par le fait que le porte-objectif (13) est susceptible d'être basculé autour d'un boulon fileté (20) incliné en direction vers le trajet du faisceau de reproduction (10), dans le voisinage d'un tube d'objectif se situant dans la position d'utilisation.

3. Dispositif selon la revendication 2, caractérisé par le fait que le porte-objectif (13) est guidé au niveau du boulon fileté (20) par l'intermédiaire d'une boutonnière (19).

4. Dispositif selon la revendication 3, caractérisé par le fait que la direction de la boutonnière (19) s'étend essentiellement radialement par rapport à l'axe (29).

5. Dispositif selon l'une des revendications 2 à 4, caractérisé par le fait qu'une lame de ressort (26) qui est reliée au boulon fileté (20) agit sur le porte-objectif (13).

6. Dispositif selon l'une des revendications 2 à 5, caractérisé par le fait que le porte-objectif (13) est articulé au boulon fileté (20) par l'intermédiaire d'une articulation sphérique (13a, 21a).

7. Dispositif selon l'une des revendications antérieures, caractérisé par le fait que les tubes d'objectifs (16, 17) sont accouplés de telle façon entre eux que, pour le moins dans chacune de leurs positions, ils sont alignés avec leurs axes parallèles.

8. Dispositif selon la revendication 7, caractérisé par le fait que deux tubes d'objectifs (16, 17) sont reliés entre eux par l'intermédiaire d'une articulation à quatre points (15a, 15b, 16a, 16c, 17a, 17c).

9. Dispositif selon l'une des revendications précédentes, caractérisé par le fait que le porte-objectif (13) porte deux tubes d'objectifs (16, 17) et est susceptible d'être basculé entre deux positions de butée, chacune des positions de butée correspondant à la position de fonctionnement de l'un des deux tubes d'objectifs.

10. Dispositif selon la revendication 9, caractérisé par le fait que des moyens (30, 31, 32) sont prévus afin de maintenir le porte-objectif (13) dans l'une des deux positions de butée.

11. Dispositif selon la revendication 10, caractérisé par le fait qu'entre une cheville (32) solidaire de l'appareil et une cheville (31) fixée au porte-objectif (13), est armé un ressort à branches (30) qui tend à refouler le porte-objectif respectivement contre l'une des butées (28, 29).

*Fig. 1*

*Fig. 3*

*Fig. 4*

*Fig. 2*